# EUROPEAN PATENT SPECIFICATION

(11) **EP 2 468 494 B1**
(45) Date of publication and mention of the grant of the patent: **14.08.2013**
(21) Application number: 10196272.8
(22) Date of filing: 21.12.2010
(51) Int. Cl.: B32B 1/08, F16L 11/04, B32B 25/10, B32B 25/16

(54) **Flexible fluid hose having two elastomeric inner layers**
Flexibler Flüssigkeitsschlauch mit zwei elastomerischen Innenschichten
Tuyau flexible pour liquides doté de deux couches internes en élastomère

(43) Date of publication of application: 27.06.2012
(73) Proprietor: Eaton Industrial IP GmbH & Co. KG, 12529 Schönefeld (DE)
(72) Inventor: Kuenstel, Christian, 77887 Sasbachwalden (DE); Schmidt, Juergen, 76437 Rastatt (DE); Wilczek, Frank, 30559 Hannover (DE)
(74) Representative: Leadbetter, Benedict

(56) References cited:
- EP-A1- 1 348 538
- EP-A2- 1 048 453
- US-A- 6 037 025

## Description

The present invention refers to a flexible fluid hose, which is particularly suitable for high pressure applications. The hose contains several layers, which are made of different materials. The different layers are provided in order to achieve the desired characteristics of the hose such as pressure stability or temperature resistance.

A hose for use in automotive power steering applications is disclosed in EP 1 363 059 A1. This hose contains an inner tube, at least one reinforcing layer and a cover layer. The inner tube is formed of at least an innermost rubber layer and an adjacent thermoplastic layer. The innermost layer is formed of a rubber compound such as nitrile butadiene rubber (NBR), hydrogenated nitrile butadiene rubber (HNBR), chlorosulfonated polyethylene rubber (CSM) or chlorinated polyethylene (CPE). The thermoplastic layer is formed of a high modulus plastic material.

The innermost layer made of HNBR is able to withstand chemical and temperature degradation. However, HNBR material is expensive. Moreover, the thermoplastic layer adjacent to the innermost HNBR layer has the disadvantage that the connection to a reinforcing layer around the thermoplastic layer is insufficient. Particularly the bond between the thermoplastic material and steel wires of the reinforcing layer is non-satisfactory. Therefore, an additional layer between the wires of a reinforcement layer and the thermoplastic layer is necessary.

In US 6,037,025 a reinforced rubber hose is disclosed that has an inner tube consisting of two layers. The inner-tube outside layer is formed of a vulcanized diene rubber composition, whereas the inner-tube inside layer is formed of a vulcanized hydrogenated nitrile rubber composition. The inner tube is covered by a reinforcement yarn layer.

It is therefore an object of the present invention to improve a flexible hose for high pressure applications which provides a higher aging and temperature resistance and which is less expensive than hoses according to the prior art.

This object is achieved with a hose according to claim 1 and with a method of manufacturing said hose according to claim 8.

The flexible fluid hose contains a first elastomeric inner layer defining a fluid channel of the hose. The first elastomeric inner layer consists of hydrogenated nitrile butadiene rubber (HNBR). This rubber material provides a good temperature and chemical resistance and ensures a high lifetime of the hose. A second elastomeric inner layer directly encases the first elastomeric inner layer. This second elastomeric inner layer is provided to give a sufficient mechanical strength to the first inner layer of the hose. The second elastomeric inner layer is made of a standard nitrile butadiene rubber (NBR) material. Particularly, the first elastomeric inner layer is less thick than the second elastomeric inner layer. Due to this the costs for the hose can be reduced. The thickness of the fist elastomeric inner layer is preferably at most 50% or more preferably at most 30% of the thickness of the second elastomeric inner layer.

Because both inner layers are made of elastomeric material the hose can comply with the standard according to DIN EN 856. Thermoplastic material is avoided in the layers of the inventive hose. The two elastomeric inner layers provide a sufficient connection with each other and are also easily connectable to further layers.

Attached to the second elastomeric inner layer is a reinforcing layer containing reinforcing material, such as for example spiraled or braided or knitted reinforcement material. The reinforcement material contains metal wires. Such reinforcement material gives the hose high pressure resistance. Because also the second inner layer is made of elastomeric material a good bond can be achieved between the reinforcement material and the second elastomeric inner layer.

The first elastomeric inner layer can easily be produced by extrusion particularly directly on a mandrel. Alternatively the extruded first elastomeric inner layer can be put on the mandrel after extrusion. Advantageously, the second elastomeric inner layer is made of an elastomeric ribbon, which is wrapped around the first elastomeric inner layer. In so doing the thickness of the second elastomeric inner layer can easily be varied during the production of different hose types. A standard elastomeric ribbon can be provided for the manufacturing process. However, it is also possible to extrude the second elastomeric inner layer directly on the first elastomeric inner layer.

In yet another embodiment of the present invention the second elastomeric inner layer is attached to the first elastomeric inner layer by providing a chemically connection. No intermediate layer is provided for connecting the two elastomeric inner layers. Preferably, the chemically connection is implemented by vulcanisation.

Further features and details of the embodiments of the present invention are disclosed in the description, the drawing and the claims. Preferred embodiments are explained below with reference to the accompanying drawing, wherein:
Figure 1 is a schematic view in longitudinal section of a first embodiment of a flexible hose,
Figure 2 shows a modified second embodiment of the hose in a schematic view in longitudinal section and
Figure 3 shows the wrapping of an elastomeric ribbon onto the outer surface of a first elastomeric inner layer during manufacturing of the hose.

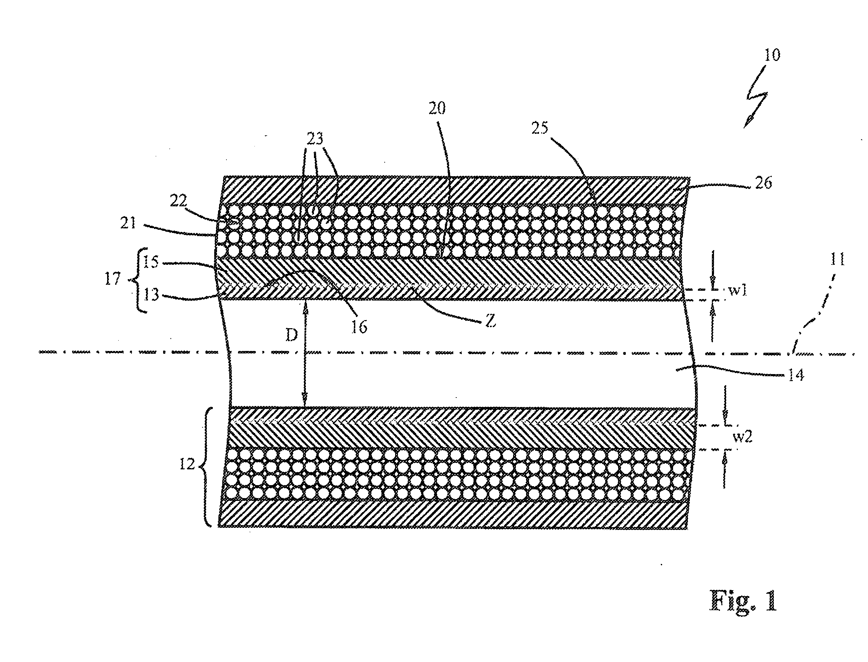

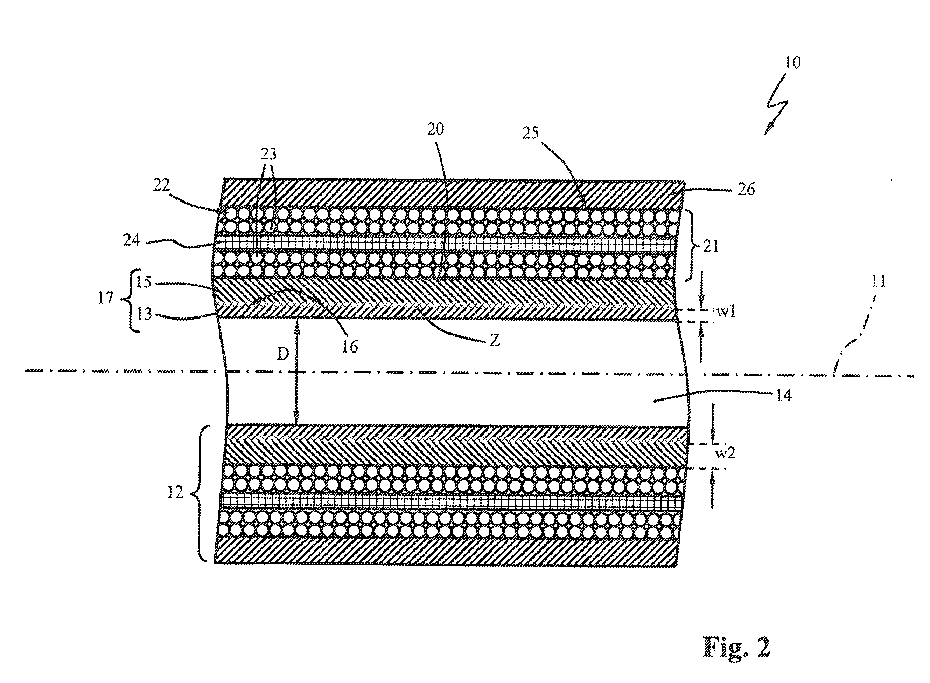

In figures 1 and 2 the flexible house 10 is shown which is particularly suitable for high pressure applications where the fluid pressure conveyed in the hose 10 is at least 400 bar. The hose 10 contains several layers, which perform different functions and which are schematically illustrated in figures 1 and 2. The different layers are arranged coaxially to a longitudinal axis 11 of the hose 10.

In a first preferred embodiment according to figure 1 the hose 10 contains for layers 12. A first inner elastomeric layer defines a fluid channel 14 along the longitudinal axis 11 of the hose. The fluid channel 14 has the diameter D. To provide enough resistance against the temperature of the conveyed fluid and against chemical degradation the first elastomeric inner layer is made of hydrogenated nitrile butadiene rubber (HNBR). Adjacent to the first elastomeric inner layer 13 a second elastomeric inner layer 15 is provided. The second elastomeric inner layer 15 is directly attached to the outer surface 16 of the first elastomeric inner layer 13. Between the two elastomeric inner layers 13, 15 no intermediate layer is provided. Direct connection between the two elastomeric inner layers 13, 15 is implemented. Preferably a zone Z of chemical connection is provided in which the two layers are connected with each other. The thickness of the zone Z is smaller than the first thickness w1 of the first elastomeric inner layer 13 and the second thickness w2 of the second elastomeric inner layer 15.

The two elastomeric inner layers 13, 15 can be denoted as inner tube 17 of the flexible hose 10. The material used for the two elastomeric inner layers 13, 15 is different. Preferably, the second elastomeric inner layer 15 is made of a standard polymer material like nitrile butadiene rubber (NBR). It could also be made of a fluorocarbon polymer. However, it is decisive that not only the first elastomeric inner layer 13, but also the second elastomeric inner layer 15 is made of elastomeric material. In so doing the flexible house 10 can comply with the standard according to DIN EN 856.

Because HNBR material is expensive the first wall thickness w1 of the first elastomeric inner layer 13 is smaller than the second wall thickness w2 of the adjacent second elastomeric inner layer 15. Preferably, the first wall thickness w1 corresponds to at most 50% or at most 30% of the second wall thickness w2. The total wall thickness w1 + w2 of the inner tube 17 is predefined to provide a sufficient mechanical strength of the inner tube 17. The material and the dimensions of the second elastomeric inner layer 15 mainly define the mechanical strength of this inner tube 17.

To the outer surface 20 of the second elastomeric inner layer 15 a reinforcing layer 21 is attached. The reinforcing layer 21 contains reinforcement material 22. Preferably, the reinforcement material 22 includes filaments 23 or fibers. The filaments 23 can for example form spiraled or braided or knitted plies or layers of reinforcement material 22. Preferably, metal wires in multiple plies are used as reinforcement material 22 as schematically shown in figures 1 and 2. The number of plies of metal wires which form the reinforcing layer 21 can be varied according to the required pressure resistance of the hose 10.

As shown in figure 2 in a modified second embodiment of the invention between two adjacent plies of metal wires a glass fiber webbing 24 can be provided. This glass fiber wedding 24 can additionally strengthen the hose 10. The wall thickness of the glass fiber webbing 24 can be kept small and thus a hose 10 with a small outer diameter can be provided having a remarkable pressure resistance. The filament 23 of the reinforcing layer 21 and/or the fibers of the glass fiber webbing 24 can be arranged in circumferential direction and/or in longitudinal dimension and/or helically around the second elastomeric inner layer 15.

The reinforcing layer 21 is covered at its outer surface 25 by a cover layer 26. The cover layer 26 can be of a suitable material, preferably polymeric rubber.

The described flexible hose 10 is manufactured as follows.

In a first step the inner hose 17 is produced. Hydrogenated nitrile butadiene rubber (HNBR) is extruded on a mandrel to produce the first elastomeric inner layer 13. Alternatively, the extruded first elastomeric inner layer 13 can also be placed on the mandrel after extrusion.

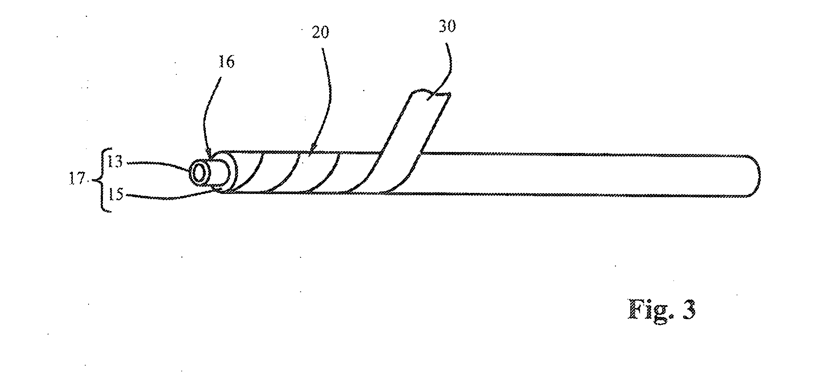

As shown in figure 3 a ribbon 30 of elastomeric material such as NBR is helically wrapped around the outer surface 16 of the first elastomeric inner layer 13. The second wall thickness w2 of the second elastomeric inner layer 15 can in this way easily be varied according to the requirements, particularly depending on the desired mechanical strength of the inner tube 17. The two elastomeric inner layers 13, 15 are directly arranged adjacent to each other and chemically connected by vulcanisation.

After having produced the inner tube 17 the reinforcing layer 21 is attached to the outer surface 20 of the second elastomeric inner layer 15. Particularly the reinforcing layer 21 contains metal wires as reinforcing filaments 23. In that the second elastomeric inner layer consists of elastomeric material a good connection to the reinforcing layer 21 is achieved because the elastomeric material provides good adhesion to the metal wires.

Finally, the reinforcing layer 21 is covered by a cover layer 26 which can be extruded on the outer surface 25 of the reinforcing layer 21.

The present invention refers to hose 10, which is suitable for high pressure applications and a method for producing same. The hose 10 contains a flexible inner tube 17. The inner tube 17 is made of two different elastomeric materials. A first elastomeric inner layer 13 defines a fluid channel 14 of the hose 10 along its longitudinal axis 11. Directly on the outer surface 16 of the first elastomeric inner layer 13, a second elastomeric inner layer 15 is attached. The first elastomeric inner layer 13 is made of hydrogenated nitrile butadiene rubber (HNBR). The second elastomeric inner layer is preferably made of nitrile butadiene rubber (NBR). The two inner layers 13, 15 are connected to each other by a vulcanization process. Around the inner tube 17 a reinforcing layer 21 is provided which is covered by a cover layer 26. Between the reinforcing layer 21 and the inner tube 17 no additional intermediate layers are provided.

## Claims

1. Flexible fluid hose (10) particularly for high fluid pressure applications,
having a first elastomeric inner layer (13), which defines a fluid channel (14) along the longitudinal axis (11) of the hose (10), wherein the first elastomeric inner layer (13) is made of hydrogenated nitrile butadiene rubber (HNBR),
having a second elastomeric inner layer (15), which is directly attached to the outer surface (16) of the first elastomeric inner layer (13),
having a reinforcing layer (21), which is attached to the outer surface (20) of the second elastomeric inner layer (15) and which contains reinforcement material (22), wherein the second elastomeric inner layer (15) consists of nitrile budatiene rubber (NBR), **characterized in that** the reinforcement material (22) contains metal wires.

2. Flexible fluid hose (10) according to claim 1, wherein the reinforcing layer (21) contains spiraled or braided or knitted reinforcement material (22).

3. Flexible fluid hose (10) according to claim 1, wherein the wall thickness (w1) of the first elastomeric inner layer (13) is less than the wall thickness (w2) of the second elastomeric inner layer (15).

4. Flexible fluid hose (10) according to claim 1, wherein the first elastomeric inner layer (13) is produced by extrusion.

5. Flexible fluid hose (10) according to claim 1, wherein the second elastomeric inner layer (15) is made of an elastomeric ribbon (30), which is helically wrapped around the first elastomeric inner layer (13).

6. Flexible fluid hose (10) according to claim 1, wherein the second elastomeric inner layer (15) is chemically connected to the first elastomeric inner layer (13).

7. Flexible fluid hose (10) according to claim 1, wherein the outer surface of the reinforcing layer (21) is covered by a cover layer (26).

8. Method for manufacturing a flexible fluid hose (10),
- extruding hydrogenated nitrile butadiene rubber (HNBR) to form a first elastomeric inner layer (13), which defines a fluid channel (14) along the longitudinal axis (11) of the hose (10),
- producing a second elastomeric inner layer (15) and attaching the second elastomeric inner layer (15) directly onto the outer surface of the first elastomeric inner layer (13),
- producing a reinforcing layer (21) containing reinforcement material (22) and attaching the reinforcing layer (21) directly to the outer surface (20) of the second elastomeric inner layer (15), **characterized by** the second elastomeric inner layer (15) consisting of nitrile budatiene rubber (NBR), and the reinforcing layer (21) contains metal wires.

9. Method according to claim 11, wherein the production of the second elastomeric inner layer (15) includes helically wrapping an elastomeric ribbon (30) around the outer surface (16) of the first elastomeric inner layer (13) and producing a chemical connection with the first elastomeric inner layer (13).

10. Method according to claim 12, wherein the chemical connection between the first and second elastomeric inner layers (13, 15) is achieved by vulcanisation.

## Patentansprüche

1. Flexibler Flüssigkeitsschlauch (10), insbesondere für die Anwendungen bei hohem Flüssigkeitsdruck,
besitzt eine erste elastomere Innenschicht (13), die einen Flüssigkeitskanal (14) entlang der Längsachse (11) des Schlauchs (10) bildet, in dem die erste elastomere Innenschicht (13) aus hydriertem Acrylnitril-Butadien-Kautschuk (HNBR) besteht,
besitzt eine zweite elastomere Innenschicht (15), die direkt mit der Außenfläche (16) der ersten elastomere Innenschicht (13) verbunden ist,
besitzt eine verstärkende Schicht (21), die an der Außenfläche (20) der zweiten elastomeren Innenschicht (15) angebracht ist und die Verstärkungsmaterial (22) enthält, während die zweite elastomere Innenschicht (15) aus Nitril-Butadien-Kautschuk (NBR) besteht; kennzeichnend hierfür ist, dass das Verstärkungsmaterial (22) Metalldrähte enthält.

2. Flexibler Flüssigkeitsschlauch (10) gemäß Anspruch 1, in dem die verstärkende Schicht (21) spiralförmiges, geflochtenes oder gewobenes Verstärkungsmaterial (22) enthält.

3. Flexibler Flüssigkeitsschlauch (10) gemäß Anspruch 1, in dem die Wanddicke (w1) der ersten elastomeren Innenschicht (13) geringer ist als die Wanddicke (w2) der zweiten elastomeren Innenschicht (15).

4. Flexibler Flüssigkeitsschlauch (10) gemäß Anspruch 1, in dem die erste elastomere Innenschicht (13) durch Extrudieren entsteht.

5. Flexibler Flüssigkeitsschlauch (10) gemäß Anspruch 1, in dem die zweite elastomere Innenschicht (15) aus einem elastomeren Band besteht (30), das die erste elastomere Innenschicht spriralförmig ummantelt (13).

6. Flexibler Flüssigkeitsschlauch (10) gemäß Anspruch 1, in dem die zweite elastomere Innenschicht (15) mit der ersten elastomeren Innenschicht (13) chemisch verbunden ist.

7. Flexibler Flüssigkeitsschlauch (10) gemäß Anspruch 1, in dem die Außenfläche der verstärkenden Schicht (21) durch eine Abdeckungsschicht bedeckt ist (26).

8. Methode für die Herstellung eines flexiblen Flüssigkeitsschlauches (10),
- Extrudieren von hydriertem Acrylnitril-Butadien-Kautschuk (HNBR) zum Formen einer ersten elastomeren Innenschicht (13), die einen Flüssigkeitskanal (14) entlang der Längsachse (11) des Schlauchs (10) bildet,
- Herstellen einer zweiten elastomeren Innenschicht (15) und direktes Anbringen der zweiten elastomeren Innenschicht (15) auf die Außenfläche der ersten elastomeren Innenschicht (13),
- Herstellen einer verstärkenden Schicht (21), die Verstärkungsmaterial enthält (22) und direktes Anbringen der verstärkenden Schicht auf die Außenfläche (20) der zweiten elastomeren Innenschicht (15); kennzeichnend hierfür ist, dass die zweite elastomere Innenschicht (15) aus Nitril-Butadien-Kautschuk (NBR) besteht und die Verstärkungsschicht Metalldrähte enthält.

9. Methode gemäß Anspruch 11, bei der die Herstellung der zweiten elastomeren Innenschicht (15) eine spiralförmige Ummantelung des elastomeren Bands (30) um die Außenfläche (16) der ersten elastomeren Innenschicht (13) sowie die Herstellung einer chemischen Verbindung mit der ersten elastomeren Innenschicht (13) beinhaltet.

10. Methode gemäß Anspruch 12, bei der die chemische Verbindung zwischen der ersten und zweiten elastomeren Innenschicht (13, 15) durch Vulkanisierung erreicht wird.

## Revendications

1. Flexible produit (10) en particulier pour les applications à pression de fluide élevée,
ayant une première couche élastomère intérieure (13), qui définit un canal de fluide (14) le long de l'axe longitudinal (11) du tuyau flexible (10), où la première couche élastomère intérieure (13) est fabriquée en caoutchouc nitrile hydrogéné (HNBR),
ayant une seconde couche élastomère intérieure (15), qui est directement fixée à la surface extérieure (16) de la première couche élastomère intérieure (13),
ayant une couche de renforcement (21), qui est fixée sur la surface extérieure (20) de la seconde couche élastomère intérieure (15) et qui contient un matériau de renforcement (22), où la seconde couche élastomère intérieure (15) est composée de caoutchouc nitrile (NBR), **caractérisée en ce que** le matériau de renforcement (22) contient des fils métalliques.

2. Flexible produit (10) selon la revendication 1, où la couche de renforcement (21) contient un matériau de renforcement en spirale, tressé ou à mailles (22).

3. Flexible produit (10) selon la revendication 1, où l'épaisseur de paroi (w1) de la première couche élastomère intérieure (13) est inférieure à l'épaisseur de paroi (w2) de la seconde couche élastomère intérieure (15).

4. Flexible produit (10) selon la revendication 1, où la première couche élastomère intérieure (13) est produite par extrusion.

5. Flexible produit (10) selon la revendication 1, où la seconde couche élastomère intérieure (15) est composée d'un ruban élastomère (30), qui est enroulé en hélice autour de la première couche élastomère intérieure (13).

6. Flexible produit (10) selon la revendication 1, où la seconde couche élastomère intérieure (15) est liée chimiquement à la première couche élastomère intérieure (13).

7. Flexible produit (10) selon la revendication 1, où la surface extérieure de la couche de renforcement (21) est recouverte d'une couche de protection (26).

8. Méthode de fabrication d'un flexible produit (10),
- extrusion de caoutchouc nitrile hydrogéné (HNBR) pour former une première couche élastomère intérieure (13), qui définit un canal de fluide (14) le long de l'axe longitudinal (11) du tuyau flexible (10),
- ce qui produit une seconde couche élastomère intérieure (15) et fixe une seconde couche élastomère intérieure (15) directement sur la surface extérieure de la première couche élastomère intérieure (13),
- ce qui produit une couche de renforcement (21) contenant un matériau de renforcement (22) et fixant la couche de renforcement (21) directement sur la surface extérieure (20) de la seconde couche élastomère intérieure (15), **caractérisée par** la seconde couche élastomère intérieure (15) comprenant du caoutchouc nitrile (NBR) et la couche de renforcement (21) contient des fils métalliques.

9. Méthode selon la revendication 11, où la production de la seconde couche élastomère intérieure (15) comprend l'enroulage en hélice d'un ruban élastomère (30) autour de la surface extérieure (16) de la première couche élastomère intérieure (13) et produit une liaison chimique avec la première couche élastomère intérieure (13).

10. Méthode selon la revendication 12, où la liaison chimique entre la première et la seconde couches élastomères intérieures (13, 15) est produite par vulcanisation.
